# FASCICULE DE BREVET EUROPEEN

(11) **EP 4 406 789 B1**
(45) Date de publication et mention de la délivrance du brevet: **18.06.2025**
(21) Numéro de dépôt: 24153354.6
(22) Date de dépôt: 23.01.2024
(51) Int. Cl.: B60R 21/34, B60R 19/52, B60R 19/18

(54) **ENSEMBLE POUR PARE-CHOCS AVANT DE VÉHICULE AUTOMOBILE**
ANORDNUNG FÜR EINEN FRONTSTOSSFÄNGER
ASSEMBLY FOR A FRONT BUMPER

(30) Priorité: 26.01.2023 FR 2300718
(43) Date de publication de la demande: 31.07.2024
(73) Titulaire: Stellantis Auto SAS, 78300 Poissy (FR)
(72) Inventeur: PERON, RODOLPHE, 95220 HERBLAY (FR); BOUDAN, JULIEN, 91210 DRAVEIL (FR); ROYER, GUILLAUME, 91680 BRUYERES LE CHATEL (FR)
(74) Mandataire: BCIP

(56) Documents cités:
- WO-A1-2013/041788
- WO-A1-2019/058039
- CN-U- 208 149 248
- FR-A1- 3 089 176
- FR-A1- 3 111 597

## Description

L'invention traite du choc piéton contre un ensemble pour pare-chocs avant de véhicule automobile. L'invention concerne la fixation d'une grille à un absorbeur d'un ensemble pour pare-chocs avant de véhicule automobile. L'invention propose un ensemble pour pare-chocs avant de véhicule automobile. L'invention a également pour objet un véhicule automobile.

Un véhicule automobile comporte des ensembles de protection configurés pour absorber un choc survenant à l'avant du véhicule automobile. Lors d'un tel choc frontal, ces ensembles de protection permettent d'en dissiper l'énergie afin de protéger des éléments du véhicule situés plus en arrière, tout comme les utilisateurs présents dans l'habitacle.

Ces ensembles de protection intègrent la peau de pare-chocs avant. Cette dernière forme partiellement la carrosserie du véhicule automobile, et présente différents écrans extérieurs dont la précision d'assemblage contribue à la qualité perçue comme à l'aérodynamisme. Ces écrans extérieurs jouxtent des dispositifs lumineux, des ailes latérales et un capot avant. Ces écrans incluent une ou plusieurs grilles d'entrée d'air, qui sont fréquemment intégrée en position centrale.

Chaque grille d'entrée d'air doit respecter différents critères de réparabilité en fonction de la vitesse des chocs. Par exemple pour un choc à faible vitesse, l'ensemble est conçu pour absorber le choc par déformation élastique, donc sans nécessiter de réparation ultérieure. Lors de ce choc, la peau de pare-chocs se déforme de manière élastique lors du contact avec l'obstacle, puis revient en position sans que ne subsiste de déformation permanente après éloignement de l'obstacle impliqué dans le choc.

Ces ensembles comprennent couramment un système d'absorption de choc à l'avant de la structure du véhicule automobile, et un absorbeur de choc pour parechoc avant situé en avant du système d'absorption de choc. Le système d'absorption de choc prend la forme d'une poutre métallique fixée solidairement à une structure du véhicule automobile. Ces ensembles de protection sont situés verticalement entre la grille supérieure de parechoc et une grille inférieure d'admission d'air du véhicule automobile.

Le document FR3089176A1 décrit un dispositif d'absorption de choc de façade avant pour véhicule automobile. Le dispositif comprend : une grille s'étendant verticalement devant une traverse supérieure de la façade avant ; un support s'étendant horizontalement depuis un bord supérieur de la grille, jusqu'à une zone de fixation dudit support à la traverse supérieure. Un élément de soutien est logé dans la partie arrière de la grille. L'élément de soutien prend appui sur la traverse supérieure, il limite l'amplitude de la déformation de la portion inférieure de la grille. L'élément de soutien est massif, en mousse plastique.

Le document FR3111597A1 décrit un ensemble de parechoc avant pour véhicule automobile. L'ensemble de parechoc avant comporte : une grille inférieure de parechoc. La grille inférieure de parechoc comporte au niveau d'une partie médiane, une ouverture centrale, un radar de détection fixé solidairement à la grille inférieure de parechoc au niveau de l'ouverture centrale, un absorbeur de choc. L'absorbeur de choc s'étend longitudinalement entre les deux bords latéraux. La zone médiane de l'absorbeur de choc comporte une casquette qui s'étend en saillie de la face arrière de l'absorbeur de choc. La grille inférieure s'étend sous l'absorbeur de choc.

Le document WO2019058039A1 décrit un véhicule automobile comprenant : une traverse de pare-chocs avant ; un bouclier de pare-chocs avant, disposé devant la traverse ; deux projecteurs disposés latéralement de part et d'autre du véhicule et verticalement à distance et au-dessus de la traverse ; au moins une pièce de fixation d'un des projecteurs, reliant ledit projecteur à la traverse. Le bouclier comprend, sur une face interne, au moins une zone d'appui dudit bouclier, et chaque pièce de fixation comprend une zone de maintien coopérant avec la zone d'appui. Le bouclier comprend également une coque avec une ouverture centrale et une grille d'entrée d'air disposée dans ladite ouverture, les zones d'appui du bouclier étant formées ou fixées sur ladite grille. Le document CN 208 149 248 U divulgue un ensemble pour pare-chocs avant de véhicule automobile conforme au préambule de la revendication 1.

Ces véhicules optimisent la sécurité tout en respectant un impératif de production en grande série et de qualité d'assemblage. Toutefois, il existe un besoin d'encore améliorer la précision de montage.

L'invention a pour objectif de répondre à au moins un des problèmes ou inconvénients rencontrés dans l'art antérieur. En particulier, l'invention a pour objectif d'améliorer le positionnement d'une grille d'entrée d'air par rapport à un absorbeur de choc d'un ensemble pour pare-chocs de véhicule automobile. L'invention a également pour objectif d' optimiser la sécurité, la compacité, et le positionnement de la grille d'entrée d'air par rapport à un absorbeur de choc d'un ensemble pour pare-chocs de véhicule automobile.

Selon un premier aspect, l'invention propose un ensemble pour pare-chocs avant de véhicule automobile, l'ensemble pour pare-chocs avant comprenant les caractéristiques de la revendication 1.

Grâce à la patte de positionnement et à son agencement contre la face de positionnement, la position de la grille est indexée de manière précise. La précision de montage est optimale dans un espace restreint. En complément, la patte de positionnement apporte une souplesse mécanique permettant un contact fusible qui cède dans l'éventualité d'un choc piéton afin d'éviter de le blesser avec la grille d'entrée d'air.

On aura bien compris que l'invention propose un ensemble pour pare-chocs de véhicule automobile, l'ensemble pour pare-chocs avant comprenant une grille d'entrée d'air et un absorbeur de choc avec un corps transversal telle une traverse ; remarquable en ce que la grille d'entrée d'air comprend une languette de positionnement avec un tronçon de positionnement, et le corps transversal comprend une empreinte de forme complémentaire au tronçon de positionnement afin de positionner la patte de positionnement par rapport au corps transversal.

Conformément à l'invention, le relief de positionnement comprend une gorge de positionnement avec une profondeur, la patte de positionnement comprenant une épaisseur maximale inférieure à ladite profondeur.

Préférentiellement, la portion de positionnement comprenant au moins deux surfaces de positionnement coopérant avec le relief de positionnement.

Conformément à l'invention, le corps transversal présente une direction transversale, la gorge de positionnement est inclinée par rapport à la direction transversale d'un premier angle compris entre 20° et 80° ; préférentiellement compris entre 30° et 60°.

Préférentiellement, le premier angle est compris entre 40° et 50°.

Préférentiellement, la patte de positionnement présente un tronçon de liaison avec une première largeur, la portion de positionnement s'étendant depuis le tronçon de liaison et comprend une deuxième largeur supérieure à la première largeur.

Préférentiellement, la portion de positionnement comprend un disque contre la face de positionnement.

Préférentiellement, le relief de positionnement comprend une largeur de relief supérieure ou égale à la deuxième largeur.

Préférentiellement, la largeur de relief est comprise entre 90% et 110% de la deuxième largeur.

Préférentiellement, la patte de positionnement présente une longueur et une épaisseur moyenne, la portion de positionnement comprend une aile d'élargissement avec une épaisseur auxiliaire inférieure à l'épaisseur moyenne.

Préférentiellement, la grille d'entrée d'air comprend un plan vertical et un cadre, la patte de positionnement s'étendant dans le plan vertical depuis le cadre.

Préférentiellement la patte de positionnement est plus fine que le cadre et le cadre est en dessous du corps transversal.

Préférentiellement, l'ensemble pour pare-chocs avant comprend en outre un élément de peau de pare-chocs, la patte de positionnement étant entre l'élément de peau de pare-chocs et l'absorbeur de choc.

Préférentiellement, la portion de positionnement comprend une surface d'appui contre la face de positionnement ; la surface d'appui étant lisse.

Préférentiellement, le relief de positionnement est un premier relief de positionnement avec une première direction principale, la patte de positionnement est une première patte de positionnement, la portion de positionnement est une première portion de positionnement ; la grille d'entrée d'air comprend une deuxième patte de positionnement avec une deuxième portion de positionnement, et la face de positionnement comprend un deuxième relief de positionnement s'interpénétrant avec la deuxième portion de positionnement afin de positionner la deuxième patte de positionnement par rapport au corps transversal ; le deuxième relief de positionnement comprend une deuxième direction principale inclinée par rapport à la première direction principale d'un deuxième angle compris entre 45° et 135° ; plus préférentiellement compris entre 80° et 100°.

Préférentiellement, la patte de positionnement est généralement plane et perpendiculaire à la direction longitudinale.

Préférentiellement, le relief de positionnement comprend une gorge de positionnement avec une profondeur, la patte de positionnement étant dans ladite profondeur.

Préférentiellement, la patte de positionnement est une patte de positionnement fusible.

Préférentiellement, la patte de positionnement est dans l'épaisseur du relief de positionnement, optionnellement dans l'épaisseur du creux de positionnement.

Préférentiellement, la face de positionnement est une face avant, le relief de positionnement étant formé dans ladite face de positionnement.

Préférentiellement, la grille d'entrée d'air est en avant et/ou au-dessous de l'absorbeur de choc.

Préférentiellement, la portion de positionnement comprend une surface d'appui lisse contre une surface de réception lisse de la face de positionnement.

Préférentiellement, la patte de positionnement et le relief de positionnement coopèrent ensemble afin d'assurer le positionnement.

Selon un autre aspect, l'invention propose un ensemble pour pare-chocs avant de véhicule automobile, l'ensemble pour pare-chocs avant comprenant une grille d'entrée d'air et un absorbeur de choc avec un corps transversal présentant une face de positionnement ; remarquable en ce que la face de positionnement comprend une gorge de positionnement ; et la grille d'entrée d'air comprend une patte de positionnement avec une portion de positionnement dans la gorge de positionnement afin de positionner la patte de positionnement par rapport au corps transversal.

Selon un autre aspect, l'invention propose un ensemble pour pare-chocs avant de véhicule automobile, l'ensemble pour pare-chocs avant comprenant une grille d'entrée d'air et un absorbeur de choc avec un corps transversal présentant une face de positionnement ; remarquable en ce que la grille d'entrée d'air comprend une patte de positionnement avec une portion de positionnement présentant un orifice de positionnement ; et la face de positionnement comprend une protrusion de positionnement dans l'orifice de positionnement afin de positionner la patte de positionnement par rapport au corps transversal.

Selon un autre aspect, l'invention propose un ensemble pour pare-chocs avant de véhicule automobile, l'ensemble pour pare-chocs avant comprenant une grille d'entrée d'air et un absorbeur de choc avec un corps transversal présentant une surface de positionnement ; remarquable en ce que la grille d'entrée d'air comprend une patte de positionnement fusible avec une portion de positionnement contre la surface de positionnement afin de positionner la patte de positionnement fusible par rapport au corps transversal ; la patte de positionnement fusible étant apte à rompre contre l'absorbeur de choc en cas de choc piéton contre la grille d'entrée d'air.

Selon un autre aspect, l'invention propose un véhicule automobile comprenant un ensemble pour pare-chocs avant ; remarquable en ce que l'ensemble pour pare-chocs avant est conforme à l'invention ; préférentiellement, la grille d'entrée d'air est une grille d'entrée d'air inférieure agencée sous l'absorbeur de choc.

L'invention sera bien comprise et d'autres aspects et avantages apparaîtront clairement à la lecture de la description qui suit, donnée en référence aux figures annexées et énumérées ci-dessous.
La figure 1 est une vue de face d'un véhicule automobile selon l'invention.
La figure 2 est une vue dans l'espace d'un ensemble pour pare-chocs avant de structure de véhicule automobile selon l'invention.
La figure 3 est un agrandissement d'une vue de face d'un ensemble pour pare-chocs avant de structure de véhicule automobile selon l'invention.
La figure 4 est une vue de détail, dans l'espace, d'une patte de positionnement coopérant avec un relief de positionnement d'un ensemble pour pare-chocs avant de structure de véhicule automobile selon l'invention.
La figure 5 est une coupe d'un ensemble pour pare-chocs avant de structure de véhicule automobile selon l'invention.

Dans la description qui suit, le terme « comprendre » est synonyme de « inclure » et n'est pas limitatif en ce qu'il autorise la présence d'autres éléments dans le véhicule automobile ou l'ensemble pour pare-chocs avant auquel il se rapporte. Il est entendu que le terme « comprendre » inclut les termes « consister en ». Les termes « externe » et « interne » désigneront respectivement ce qui est orienté vers l'extérieur du véhicule et vers l'intérieur du véhicule.

Dans la présente description, le terme « longitudinal », le terme « longitudinalement », le terme « transversal », et le terme « transversalement » sont employés selon le référentiel du véhicule, dans la configuration de montage. Le terme « longitudinal » correspond à la direction principale de déplacement du véhicule. Le terme « transversal » correspond à une direction perpendiculaire à la direction principale de déplacement du véhicule. Le terme « avant » est en référence au sens principal de déplacement du véhicule. Le terme « arrière » désigne l'opposé de l'avant du véhicule.

L'axe X représente la direction longitudinale, l'axe Y représente la direction transversale, et l'axe Z représente la direction verticale du véhicule automobile. Ces trois axes définissent un trièdre direct dont l'orientation est conservée au travers des figures.

Dans la présente description, les plages de valeurs comprennent les bornes qui les délimitent.

Dans la présente description, les caractéristiques techniques sont définies dans la configuration de montage de l'ensemble pour pare-chocs avant, à moins que le contraire ne soit mentionné explicitement.

Au travers de la description, les différentes figures utilisent les mêmes signes de référence pour désigner des entités identiques ou similaires.

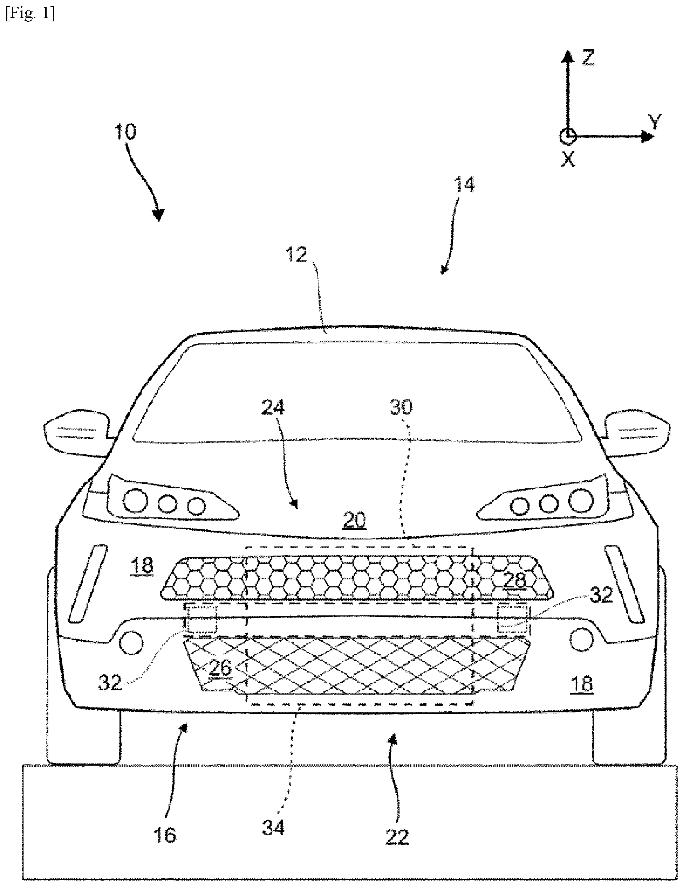

La figure 1 représente un véhicule automobile 10 selon l'invention. Le véhicule automobile 10 comprend des moyens de stockage d'énergie, telle une batterie électrique, et au moins un moteur (non représenté) adaptés pour entraîner ledit véhicule automobile 10.

Le véhicule automobile 10 comprend une structure 12, également appelée caisse. La structure 12 forme une ossature et supporte différents organes du véhicule automobile 10, dont le moteur et des ouvrants. La structure 12 forme partiellement la carrosserie 14 du véhicule au niveau du toit, des ailes avant, des piliers. La carrosserie 14 forme l'enveloppe externe du véhicule automobile 10.

Le véhicule automobile 10 comprend en outre un ensemble pour pare-chocs avant 16, tel un ensemble pour façade avant. L'ensemble pour pare-chocs avant 16, en particulier chacun de ses éléments, est adapté pour résister à des chocs, à des vitesses jusqu'à 10 km/h, préférentiellement jusqu'à 15 km/s, sans qu'il n'y ait besoin de remplacer de pièces spécifiques du véhicule, et notamment tout ou partie de ses éléments de peau de pare-chocs 18. L'ensemble pour pare-chocs avant 16 est également adapté pour limiter l'importance des blessures dans l'éventualité d'un choc piéton.

Les éléments de peau de pare-chocs 18 s'étendent jusqu'au capot 20 et jusqu'aux ailes latérales (non représentés). Les éléments de peau de pare-chocs 18 délimitent des ouvertures d'entrée d'air 22. Ces ouvertures d'entrée d'air 22 sont équipées d'au moins une grille d'entrée d'air 24, préférentiellement plusieurs grilles d'entrée d'air 24.

Les grilles d'entrée d'air 24 comprennent une grille d'entrée d'air inférieure 26, et optionnellement une grille d'entrée d'air supérieure 28. Ces grilles d'entrée d'air 24 forment des protections contre des projections. Elles contribuent à capter à et à guider les flux d'air. L'air entrant est employé en tant que comburant lorsque le véhicule automobile 10 est décliné dans sa version thermique. L'air traversant la grille d'entrée d'air supérieure 28 offre un flux pour une climatisation d'habitacle ; que le véhicule électrique soit à entraînement électrique, thermique ou hybride.

Chaque grille d'entrée d'air 24 présente un maillage. Tout type de maille peut être sélectionné en fonction des besoins de protection et de l'entrée d'air correspondante. Chaque grille d'entrée d'air 24 forme généralement une paroi perforée. Elle s'étend généralement verticalement et transversalement. Chaque grille d'entrée d'air 24 est apte à barrer au moins partiellement l'ouverture d'entrée d'air 22 correspondante.

Le véhicule automobile 10 comprend au moins un échangeur de chaleur 34, couramment appelé radiateur. L'échangeur de chaleur 34 est apte à refroidir le moteur ou l'habitacle dans le cas d'un équipement de climatisation. L'échangeur de chaleur 34 est également apte à chauffer l'habitacle via un système de pompe à chaleur.

L'ensemble pour pare-chocs avant 16 comprend également un absorbeur de choc 30. L'absorbeur de choc comprend un corps transversal. L'absorbeur de choc 30 est fixé à la structure 12 du véhicule automobile 10. Par exemple, il est fixé à des extrémités avant de brancards avant, éventuellement par l'intermédiaire de caissons d'absorption de chocs 32 ; également désignés par l'expression anglo-saxonne « crash box ». En cas de collision contre un obstacle fixe de l'environnement ou un autre véhicule, les caissons d'absorption de chocs 32 de l'ensemble pour pare-chocs avant 16 se déforment en dissipant l'énergie du choc. Ils sont configurés pour se déformer à un choc d'une vitesse seuil, par exemple d'au moins 30km/h. Ainsi, l'absorbeur de choc 30 est configuré pour transmettre l'énergie du choc aux caissons d'absorption de chocs 32 pour des vitesses supérieures ou égales audit seuil de vitesse.

L'absorbeur de choc 30 peut former une première traverse, l'ensemble pour pare-chocs avant 16 peut également comprendre une deuxième traverse (non représentée). Par exemple, ces traverses sont respectivement une traverse inférieure et une traverse supérieure.

Le véhicule automobile est par exemple un véhicule automobile particulier ou un véhicule automobile utilitaire.

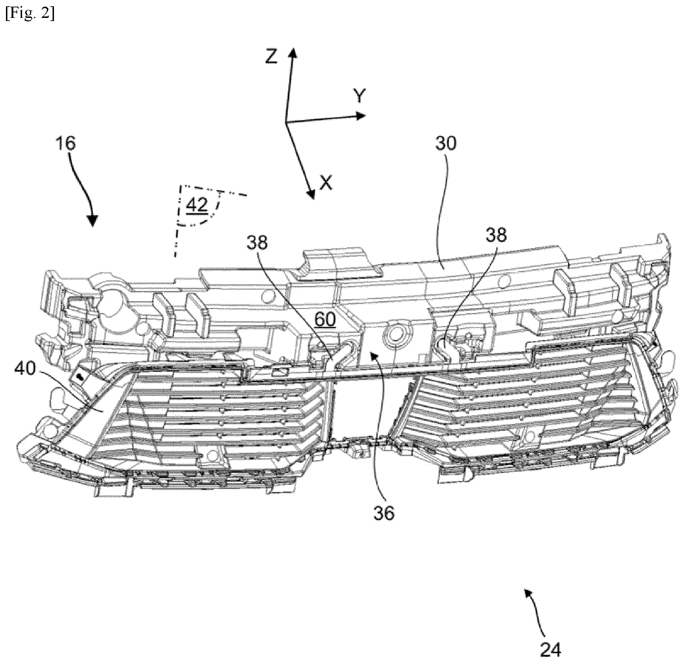

La figure 2 présente un ensemble pour pare-chocs avant 16 de véhicule automobile. Le véhicule automobile peut correspondre à celui présenté en relation avec la figure 1.

L'ensemble pour pare-chocs avant 16 comprend une grille d'entrée d'air 24, par exemple inférieure. Dans la présente illustration, la grille d'entrée d'air présente des lames horizontales. Toutefois, tout autre maillage peut être adopté. L'ensemble pour pare-chocs avant 16 comporte également un absorbeur de choc 30. L'absorbeur de choc est agencé en arrière de la grille d'entrée d'air 24. La grille d'entrée d'air 24 est en dessous de l'absorbeur de choc 30. La grille d'entrée d'air 24 est en avant et/ou au-dessous de l'absorbeur de choc 30.

L'absorbeur de choc 30 est essentiellement allongé. Il forme une traverse. Il comprend un corps transversal 60. Le corps transversal 60 peut être plein et réalisé en mousse. Alternativement, il est un corps creux. En se déformant, notamment en se comprimant ou en s'arquant, le corps transversal 60 est apte à absorber l'énergie d'un choc, par exemple à au moins 30 km/h.

Par exemple au centre, l'absorbeur de choc 30 présente une surface inférieure au-dessus du bord supérieur de la grille d'entrée d'air 24. Ainsi, en cas de collision frontale, par exemple avec un piéton, la grille d'entrée d'air 24 est apte à se déformer et à se déplacer sous l'absorbeur de choc 30. Cet aspect permet d'annihiler les points durs de l'ensemble pour pare-chocs avant 16.

L'absorbeur de choc 30 présente une face arrière et une face avant. La face avant est préférentiellement une face de positionnement 36. La face arrière est en regard de la structure (non représentée) du véhicule automobile, et est longitudinalement opposée à la face de positionnement 36. La face de positionnement 36 est en regard des éléments de peau de pare-chocs. L'absorbeur de choc 30 forme la face de positionnement 36. Cette dernière présente une surface complexe afin de recevoir différents équipements.

Selon une alternative de l'invention, la face de positionnement est en face inférieure (non représentée), ou en face supérieure de l'absorbeur de choc.

La grille d'entrée d'air 24 comprend des moyens de positionnement. Les moyens de positionnement comprennent au moins une patte de positionnement 38, préférentiellement au moins deux pattes de positionnement 38. La ou chaque patte de positionnement 38 est contre la face de positionnement 36. Les pattes de positionnement 38 coopèrent avec la face de positionnement 36 afin de positionner longitudinalement la grille d'entrée d'air 24 par rapport à l'absorbeur de choc 30. Les pattes de positionnement 38 sont pliées et/ou segmentées. Elles forment des cornes de positionnement. Elles sont en appui contre la face de positionnement 36.

La grille d'entrée d'air 24 comprend un cadre 40. Le cadre 40 délimite le passage d'air formé par la grille d'entrée d'air 24. Le cadre 40 entoure les lames de la grille d'entrée d'air 24. Au moins une ou chaque patte de positionnement 38 s'étend depuis le cadre 40 par exemple depuis son bord supérieur. Les pattes de positionnement 38 sont avantageusement des pattes supérieures.

La grille d'entrée d'air 24 comprend un plan vertical 42. Le plan vertical 42 est un plan géométrique. Il est perpendiculaire à la direction longitudinale. Le cadre 40 est avantageusement selon ce plan vertical 42. Le cadre 40 peut présenter une surface avant sensiblement convexe. Au moins une ou chaque patte de positionnement 38 s'étend dans le plan vertical 42 depuis le cadre 40. Selon une option, la ou au moins une ou chaque patte de positionnement 38 est plus fine que le cadre 40.

Ainsi, en cas de choc prédéfini, par exemple contre un piéton, la patte de positionnement rompt à sa base ; au niveau du cadre 40. La liberté de déplacement de la grille d'entrée d'air 24 est préservé en cas de choc, ce qui limite le risque de blessure pour le piéton. La gravité des éventuelles blessures aux jambes diminue. Cet aspect est encore amélioré grâce à l'agencement du cadre 40 en dessous de l'absorbeur de choc 30.

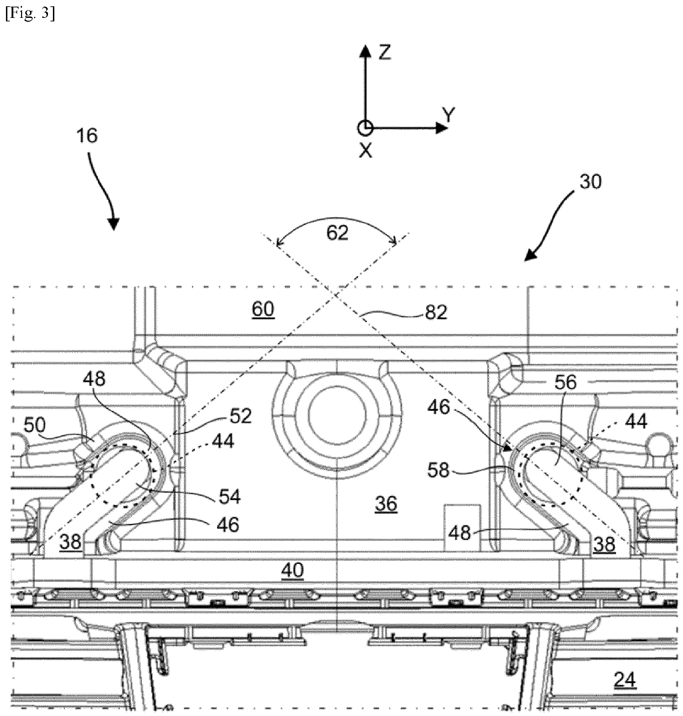

La figure 3 présente de front un ensemble pour pare-chocs avant 16 de véhicule automobile. Le véhicule automobile peut correspondre à celui présenté en relation avec l'une des figures 1 à 2.

L'ensemble pour pare-chocs avant 16 comprend une grille d'entrée d'air 24 et un absorbeur de choc 30, par exemple en dessous. L'absorbeur de choc 30 présente une face de positionnement 36 et est formé d'un corps transversal 60 telle une poutre horizontale.

La grille d'entrée d'air 24 comprend deux pattes de positionnement 38. Chaque patte de positionnement 38 présente une portion de positionnement 44 (délimitée par des traits pointillés), par exemple à son extrémité. L'extrémité peut être une extrémité libre ou une extrémité supérieure. Les portions de positionnement 44 sont en appui contre la face de positionnement 36. Cet aspect permet d'assurer un positionnement longitudinal de la grille d'entrée d'air 24 par rapport à l'absorbeur de choc 30.

Au-dessus du cadre 40 de la grille d'entrée d'air 24, la face de positionnement 36 comprend au moins un relief de positionnement 46, par exemple un relief de positionnement associé à chaque portion de positionnement 44. Chaque relief de positionnement 46 est formée dans la face de positionnement 36 ; en l'occurrence dans la face avant.

Chaque couple formé par un des reliefs de positionnement 46 et une des portions de positionnement 44 forme une interface de positionnement. Dans chaque interface de positionnement, le relief de positionnement 46 et la portion de positionnement s'interpénétrant afin de positionner la patte de positionnement par rapport au corps transversal. Chaque interface de positionnement permet au moins un positionnement longitudinal ; et optionnellement un positionnement vertical ou transversal. La combinaison des deux reliefs de positionnement 46 recevant les deux portions de positionnement 44 permet un positionnement dans les trois directions. La précision de positionnement peut dépendre d'un jeu mécanique vertical et d'un jeu mécanique transversal.

Dans le présent mode de réalisation, au moins un ou chaque relief de positionnement 46 comprend une gorge de positionnement 48. La gorge de positionnement 48 présente une profondeur mesurée selon la direction longitudinale puisque la face de positionnement 36 est en avant.

Le relief de positionnement 46 est un premier relief de positionnement 50, par exemple un relief droit, avec une première direction principale 52. La patte de positionnement 38 est une première patte de positionnement 54 avec une première portion de positionnement. La grille d'entrée d'air 24 comprend une deuxième patte de positionnement 56 avec une deuxième portion de positionnement. La face de positionnement 36 comprend un deuxième relief de positionnement 58 s'interpénétrant avec la deuxième portion de positionnement de la deuxième patte de positionnement 56 afin de positionner la deuxième patte de positionnement 56 par rapport au corps transversal ; le deuxième relief de positionnement comprend une deuxième direction principale 82 inclinée par rapport à la première direction principale 52 d'un deuxième angle 62 compris entre 45° et 135°. Préférentiellement, ledit deuxième angle 62 est compris entre 80° et 100°.

De manière générale, la grille d'entrée d'air comprend une languette de positionnement, notamment formée par une patte positionnement, avec un tronçon de positionnement. Le corps transversal comprend une empreinte, telle une empreinte creuse, de forme complémentaire au tronçon de positionnement afin de positionner la patte de positionnement par rapport au corps transversal. L'empreinte de positionnement épouse le tronçon de positionnement.

Dans le présent mode de réalisation, chaque relief de positionnement est en creux ; et s'enfonce dans l'absorbeur de choc vers l'arrière. Selon une alternative, le relief de positionnement comprend une protrusion faisant saillie vers l'avant ; et rentrant dans, préférentiellement traversant, la portion de positionnement associée.

Dans le présent mode de réalisation, la grille d'entrée d'air 24 comprend deux pattes de positionnement 38 ; toutefois, elle peut en comprendre au moins trois ou tout autre nombre nécessaire au positionnement de la grille d'entrée d'air 24. De même, la face de positionnement 36 peut comprendre autant de reliefs de positionnement 46 que de pattes de positionnement 38.

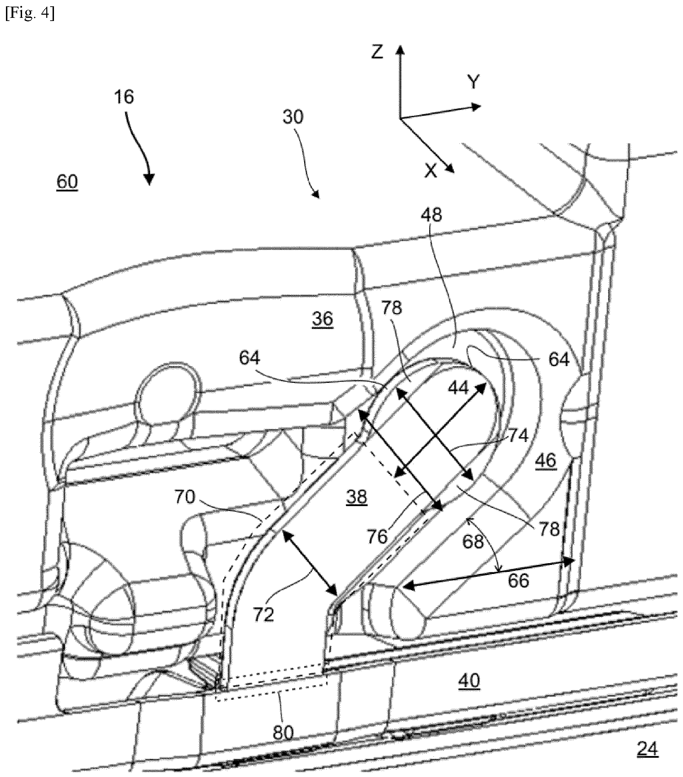

La figure 4 présente une patte de positionnement 38 et un relief de positionnement 46 d'ensemble pour pare-chocs avant 16 de véhicule automobile. Le véhicule automobile peut correspondre à celui présenté en relation avec l'une des figures 1 à 3. Dans la présente illustration, une seule patte de positionnement 38 et un seul relief de positionnement 46 sont représentés. Toutefois, l'enseignement qui suit s'applique à chaque patte de positionnement 38 et chaque relief de positionnement 46 de l'ensemble pour pare-chocs avant 16.

La grille d'entrée d'air 24 comprend une patte de positionnement 38 avec une portion de positionnement 44 contre la face de positionnement 36. Autour, la face de positionnement 36 comprend un relief de positionnement 46 qui loge la portion de positionnement 44, préférentiellement intégralement ; et au moins partiellement la patte de positionnement 38. La portion de positionnement 44 peut être un tronçon de positionnement. La portion de positionnement 44 peut généralement former un disque, ou un tampon.

Le relief de positionnement 46 et la portion de positionnement 44 sont imbriqués. Ils sont engagés l'un dans l'autre. Ils s'interpénètrent afin de positionner la patte de positionnement 38 par rapport au corps transversal 60.

Le relief de positionnement 46 comprend une gorge de positionnement 48. La gorge de positionnement 48 peut être droite. Alternativement, elle peut être oblique. Elle s'étend vers le haut et vers l'intérieur. La gorge de positionnement 48 présente une profondeur, par exemple une profondeur moyenne. La patte de positionnement 38 est logée, et s'étend dans la gorge de positionnement 48. La patte de positionnement 38 comprend une épaisseur, telle une épaisseur maximale, inférieure à ladite profondeur. L'épaisseur est mesurée suivant la direction longitudinale ; tout comme ladite profondeur du relief de positionnement 46.

La portion de positionnement 44 comprend avantageusement au moins deux surfaces de positionnement 64 coopérant avec le relief de positionnement 46 ou engagées dans le relief de positionnement 46. Les surfaces de positionnement 64 sont perpendiculaires l'une à l'autre.

Le corps transversal 60 présente une direction transversale 66. La direction transversale 66 peut correspondre à celle du véhicule automobile. La gorge de positionnement 48 est inclinée par rapport à la direction transversale 66 d'un premier angle 68 compris entre 20° et 80° ; préférentiellement compris entre 30° et 60° ; plus préférentiellement compris entre 40° et 50°. L'inclinaison de la gorge de positionnement 48 par rapport à la direction transversale 66 peut être mesurée sur son axe central ou sur un de ses bords latéraux.

La patte de positionnement 38 présente un tronçon de liaison 70 avec une première largeur 72. Le tronçon de liaison 70 peut être droit ou coudé. En étant coudé, il présente un segment vertical et un segment incliné par rapport au segment droit. Le segment droit peut être parallèle à la gorge de positionnement 48. La portion de positionnement 44 s'étend depuis le tronçon de liaison 70. La portion de positionnement 44 prolonge le tronçon de liaison 70. Elle comprend une deuxième largeur 74 supérieure à la première largeur 72. La deuxième largeur 74 peut être une largeur maximale de la portion de positionnement 44. La portion de positionnement 44 comprend un disque contre la face de positionnement. La deuxième largeur 74 correspond au diamètre du disque.

Le relief de positionnement 46 comprend une largeur de relief 76 supérieure ou égale à la deuxième largeur 74. La largeur de relief 76 peut être une largeur intérieure de la gorge de positionnement 48. La largeur de relief 76 est comprise entre 90% et 110% de la deuxième largeur 74. Ces proportions de optimisent la précision de positionnement entre la grille d'entrée d'air 24 et l'absorbeur de choc 30 tout en ménageant des jeux mécaniques facilitant le montage ; et éventuellement le démontage.

La patte de positionnement 38 présente une longueur, et une épaisseur principale constante sur toute sa longueur. La longueur est mesurée depuis le cadre 40 jusqu'à son extrémité libre. La portion de positionnement 44 comprend une aile d'élargissement 78, préférentiellement deux ailes d'élargissement 78. Chaque aile d'élargissement 78 présente une épaisseur auxiliaire inférieure à l'épaisseur moyenne, ce qui les allège. Chaque aile d'élargissement 78 augmente la surface de contact avec le relief de positionnement 46, et donc avec le fond de la gorge de positionnement 48. Le positionnement est plus précis. Lorsque l'absorbeur de choc 30 est en mousse, la patte de positionnement 38 a moins tendance à s'enfoncer ; ce qui soigne le positionnement.

La patte de positionnement 38 forme une discontinuité de matière sur le cadre 40. Elle est optionnellement plus mince que ce dernier. Elle est généralement plane et perpendiculaire à la direction longitudinale. Ainsi, en cas de déformation, la base 80 de la patte de positionnement 38 présente une concentration de contrainte. Lorsque la grille d'entrée d'air 24 est poussée vers l'arrière, la patte de positionnement 38 se plie sous l'absorbeur de choc 30, ou rompt au niveau de la base 80. La patte de positionnement 38 est ainsi une patte de positionnement fusible. Elle permet un indexage géométrique jusqu'à ce qu'un évènement de type choc piéton survienne, et qu'elle autorise l'effacement de la grille d'entrée d'air 24 ; notamment de son cadre 40 ; en arrière. La sécurité et la précision de positionnement sont optimisés.

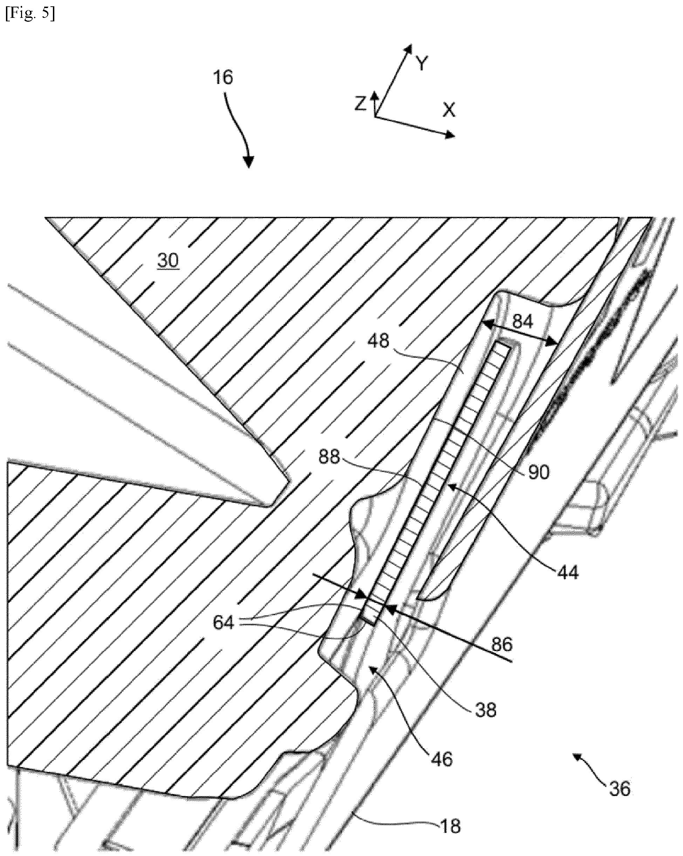

La figure 5 présente une coupe d'une interface de positionnement entre un relief de positionnement 46 et une patte de positionnement 38 d'ensemble pour pare-chocs avant 16 de véhicule automobile. Le véhicule automobile peut correspondre à celui présenté en relation avec l'une des figures 1 à 4.

L'ensemble pour pare-chocs avant 16 comprend en outre un élément de peau de pare-chocs 18, la patte de positionnement 38 étant entre l'élément de peau de pare-chocs 18 et l'absorbeur de choc 30. En cas de choc piéton, l'élément de peau de pare-chocs 18 se déforme, et rencontre la grille d'entrée d'air. Il appuie autour du relief de positionnement 46, et reste à distance de la patte de positionnement 38 qui est plus en profondeur. Ainsi en cas de choc, les capacités d'amortissement de l'absorbeur de choc 30 sont préservées au cours des déformations.

La portion de positionnement 44 et le relief de positionnement 46 coopèrent ensemble afin d'assurer le positionnement. Le relief de positionnement 46 et la portion de positionnement 44 sont liés par imbrication mécanique. Ils sont insérés l'un dans l'autre. Leur ajustement mécanique contribue à la précision de positionnement.

Le relief de positionnement 46 comprend une gorge de positionnement 48 avec une profondeur 84. La patte de positionnement 38 comprend une épaisseur maximale 86 inférieure à ladite profondeur 84. L'épaisseur maximale 86 correspond notamment l'épaisseur de la portion de positionnement 44. Ainsi, la patte de positionnement 38 est logée dans l'épaisseur du relief de positionnement 46. Elle est notamment dans la profondeur de la gorge de positionnement 48.

La portion de positionnement 44 comprenant au moins deux surfaces de positionnement 64 coopérant avec le relief de positionnement 46. Ces surfaces de positionnement 64 comprennent une surface arrière ; également appelée surface d'appui 88. La surface d'appui 88 est contre la face de positionnement 36. La surface d'appui 88 est une surface d'appui lisse. En face, la face de positionnement présente une surface de réception lisse 90 ; à l'intérieur du relief de positionnement 46. Ces surfaces (88 ; 90) sont planes. Ainsi, la surface d'appui 88 et la surface de réception lisse 90 autorisent un mouvement relatif, ce qui facilite le montage, et évite les contraintes mécaniques internes dans la patte de positionnement 38.

Selon un mode de réalisation préféré, la grille d'entrée d'air est réalisée en un matériau plastique ou composite. Le matériau plastique peut comprendre un matériau thermoplastique ou un matériau thermodurcissable. Selon un mode de réalisation préféré, le matériau plastique est sélectionné dans le groupe comprenant les résines polypropylene, polyamide, polyphtalamide, polyetherethercétone, polysulfure de phénylène, polyamide-imide, po-lyetherimide, polyarylamide, polyépoxyde, polyester insaturés, vinylester ou polyester-vinylester. Par exemple, le matériau composite comprend une matrice en un matériau plastique tel que décrit ci-dessus avec un renfort. Par exemple, le renfort comprend des fibres de verre ou de carbone.

L'invention comprend la combinaison de tous les modes de réalisation présentés par toutes les figures.

Les figures 2 à 5 sont des figures isométriques.

## Revendications

1. Ensemble pour pare-chocs avant (16) de véhicule automobile (10), l'ensemble pour pare-chocs avant (16) comprenant une grille d'entrée d'air (24) et un absorbeur de choc (30) avec un corps transversal (60) présentant une face de positionnement (36) ; la grille d'entrée d'air (24) comprenant une patte de positionnement (38) avec une portion de positionnement (44) contre la face de positionnement (36), et la face de positionnement (36) comprend un relief de positionnement (46) ; le relief de positionnement (46) et la portion de positionnement (44) s'interpénétrant afin de positionner la patte de positionnement (38) par rapport au corps transversal (60), le relief de positionnement (46) comprenant une gorge de positionnement (48) avec une profondeur (84), la patte de positionnement (38) comprenant une épaisseur maximale (86) inférieure à ladite profondeur (84) ; préférentiellement la portion de positionnement (44) comprenant au moins deux surfaces de positionnement (64) coopérant avec le relief de positionnement (46), **caractérisé en ce que** le corps transversal (60) présente une direction transversale (66) et **en ce que** la gorge de positionnement (48) est inclinée par rapport à la direction transversale (66) d'un premier angle (68) compris entre 20° et 80° ; préférentiellement compris entre 30° et 60°.

2. Ensemble pour pare-chocs avant (16) selon la revendication 1, **caractérisé en ce que** la patte de positionnement (38) présente un tronçon de liaison (70) avec une première largeur (72), la portion de positionnement (44) s'étendant depuis le tronçon de liaison (70) et comprend une deuxième largeur (74) supérieure à la première largeur (72) ; préférentiellement la portion de positionnement (44) comprend un disque contre la face de positionnement (36).

3. Ensemble pour pare-chocs avant (16) selon la revendication 2, **caractérisé en ce que** le relief de positionnement (46) comprend une largeur de relief (76) supérieure ou égale à la deuxième largeur (74),.

4. Ensemble pour pare-chocs avant (16) selon l'une des revendications 1 à 3, **caractérisé en ce que** la patte de positionnement (38) présente une longueur et une épaisseur moyenne, la portion de positionnement (44) comprend une aile d'élargissement (78) avec une épaisseur auxiliaire inférieure à l'épaisseur moyenne.

5. Ensemble pour pare-chocs avant (16) selon l'une des revendications 1 à 4, **caractérisé en ce que** la grille d'entrée d'air (24) comprend un plan vertical (42) et un cadre (40), la patte de positionnement (38) s'étendant dans le plan vertical (42) depuis le cadre (40) ; préférentiellement la patte de positionnement (38) est plus fine que le cadre (40) et le cadre (40) est en dessous du corps transversal (60).

6. Ensemble pour pare-chocs avant (16) selon l'une des revendications 1 à 5, **caractérisé en ce que** l'ensemble pour pare-chocs avant (16) comprend en outre un élément de peau de pare-chocs (18), la patte de positionnement (38) étant entre l'élément de peau de pare-chocs (18) et l'absorbeur de choc (30) ; préférentiellement, la portion de positionnement (44) comprend une surface d'appui (88) contre la face de positionnement (36) ; la surface d'appui (88) étant lisse.

7. Ensemble pour pare-chocs avant (16) selon l'une des revendications 1 à 6, **caractérisé en ce que** le relief de positionnement (46) est un premier relief de positionnement (50) avec une première direction principale (52), la patte de positionnement (38) est une première patte de positionnement (54), la portion de positionnement (44) est une première portion de positionnement ; la grille d'entrée d'air (24) comprend une deuxième patte de positionnement (56) avec une deuxième portion de positionnement, et la face de positionnement (36) comprend un deuxième relief de positionnement (58) s'interpénétrant avec la deuxième portion de positionnement afin de positionner la deuxième patte de positionnement (56) par rapport au corps transversal (60) ; le deuxième relief de positionnement (58) comprend une deuxième direction principale (82) inclinée par rapport à la première direction principale (52) d'un deuxième angle (62) compris entre 45° et 135° ; préférentiellement compris entre 80° et 100°.

8. Véhicule automobile (10) comprenant un ensemble pour pare-chocs avant (16) ; **caractérisé en ce que** l'ensemble pour pare-chocs avant (16) est conforme à l'une des revendications 1 à 7 ; préférentiellement, la grille d'entrée d'air (24) est une grille d'entrée d'air inférieure (26) agencée sous l'absorbeur de choc (30).

## Patentansprüche

1. Frontstoßfänger-Anordnung (16) für ein Kraftfahrzeug (10), wobei die Frontstoßfänger-Anordnung (16) ein Lufteinlassgitter (24) und einen Stoßdämpfer (30) mit einem Querkörper (60) mit einer Positionierungsfläche (36) umfasst, wobei das Lufteinlassgitter (24) einen Positionierungslappen (38) mit einem Positionierungsabschnitt (44) an der Positionierungsfläche (36) umfasst und die Positionierungsfläche (36) ein Positionierungsrelief umfasst (46); wobei sich das Positionierrelief (46) und der Positionierabschnitt (44) gegenseitig durchdringen, um die Positionierlasche (38) relativ zu dem Querkörper (60) zu positionieren, wobei das Positionierrelief (46) eine Positioniernut (48) mit einer Tiefe (84) umfasst, wobei die Positionierlasche (38) eine maximale Dicke (86) aufweist, die kleiner als die Tiefe (84) ist; wobei vorzugsweise der Positionierabschnitt (44) mindestens zwei Positionierflächen (64) umfasst, die mit dem Positionierrelief zusammenwirken (46), **dadurch gekennzeichnet, dass** der Querkörper (60) eine Querrichtung (66 Z T) aufweist und dass die Positioniernut (48) in Bezug auf die Querrichtung (66) um einen ersten Winkel (68) zwischen 20° und 80°, vorzugsweise zwischen 30° und 60°, geneigt ist.

2. Frontstoßfänger-Baugruppe (16) nach Anspruch 1, **dadurch gekennzeichnet, dass** die Positioniererhöhung (46) eine Positioniernut (48) mit einer Tiefe (84) aufweist, wobei die Positionierzunge (38) eine maximale Dicke (86) aufweist, die kleiner als die Tiefe (84) ist; wobei vorzugsweise der Positionierabschnitt (44) mindestens zwei Positionierflächen (64) aufweist, die mit der Positioniererhöhung (46) zusammenwirken.

3. Frontstoßfänger-Baugruppe (16) nach Patentanspruch 2, **dadurch gekennzeichnet, dass** die Positionierreliefe (46) eine Reliefbreite (76) aufweist, die größer oder gleich der zweiten Breite (74) ist.

4. Frontstoßfänger-Baugruppe (16) nach einem der Ansprüche 1 bis 3, **dadurch gekennzeichnet, dass** die Positionierlasche (38) einen Verbindungsabschnitt (70) mit einer ersten Breite (72) aufweist, wobei sich der Positionierabschnitt (44) von dem Verbindungsabschnitt (70) erstreckt und eine zweite Breite (74) aufweist, die größer ist als die erste Breite (72); vorzugsweise umfasst der Positionierabschnitt (44) eine Scheibe an der Positionierfläche (36).

5. Frontstoßfänger-Baugruppe (16) nach einem der Ansprüche 1 bis 4, **dadurch gekennzeichnet, dass** das Lufteinlassgitter (24) eine vertikale Ebene (42) und einen Rahmen (40) umfasst, wobei sich die Positionierlasche (38) in der vertikalen Ebene (42) von dem Rahmen (40) erstreckt; vorzugsweise ist die Positionierlasche (38) dünner als der Rahmen (40) und der Rahmen (40) ist unter dem Querkörper (60).

6. Frontstoßfänger-Baugruppe (16) nach einem der Ansprüche 1 bis 5, **dadurch gekennzeichnet, dass** die Frontstoßfänger-Baugruppe (16) ferner ein Stoßfänger-Hautelement (18) aufweist, wobei die Positionierlasche (38) zwischen dem Stoßfänger-Hautelement (18) und dem Stoßdämpfer (30) angeordnet ist; vorzugsweise der Positionierabschnitt (44) eine Auflagefläche (88) gegen die Positionierfläche (36) aufweist; wobei die Auflagefläche (88) glatt ist.

7. Frontstoßfänger-Anordnung (16) nach einem der Ansprüche 1 bis 6, **dadurch gekennzeichnet, dass** die Positioniererhöhung (46) eine erste Positioniererhöhung (50) mit einer ersten Hauptrichtung (52) ist, die Positionierzunge (38) eine erste Positionierzunge (54) ist, der Positionierabschnitt (44) ein erster Positionierabschnitt ist, das Lufteinlassgitter (24) eine zweite Positionierzunge (56) mit einem zweiten Positionierabschnitt umfasst und die Positionierfläche (36) eine zweite Positionierzunge umfasst Positionierrelief (58), das sich mit dem zweiten Positionierabschnitt schneidet, um die zweite Positionierlasche (56) in Bezug auf den Querkörper (60) zu positionieren; wobei das zweite Positionierrelief (58) eine zweite Hauptrichtung (82) aufweist, die in Bezug auf die erste Hauptrichtung (52) um einen zweiten Winkel (62) zwischen 45° und 135° geneigt ist; vorzugsweise zwischen 80° und 100°.

8. Kraftfahrzeug (10) mit einer vorderen Stoßfängeranordnung (16); **dadurch gekennzeichnet, dass** die vordere Stoßfängeranordnung (16) einem der Ansprüche 1 bis 7 entspricht; vorzugsweise ist das Lufteinlassgitter (24) ein unteres Lufteinlassgitter (26), das unter dem Stoßdämpfer (30) angeordnet ist.

## Claims

1. Assembly for a front bumper (16) of a motor vehicle (10), the assembly for a front bumper (16) comprising an air intake grille (24) and a shock absorber (30) with a transverse body (60) having a positioning face (36); the air intake grille (24) comprising a positioning lug (38) with a positioning portion (44) against the positioning face (36), and the positioning face (36) comprises a positioning relief (46); positioning relief (46) and the positioning portion (44) interpenetrating in order to position the positioning tab (38) by report with the transverse body (60), the positioning relief (46) comprising a positioning groove (48) with a depth (84), the positioning tab (38) comprising a maximum thickness (86) less than said depth (84); preferably the positioning portion (44) comprising at least two positioning surfaces (64) cooperating with the positioning relief (46), wherein the transverse body (60) has a transverse management (66 Z T) and in that a Z 7 the positioning groove (48) is inclined by report to the transverse management (66) by a first angle (68) comprised between 20° and 80°; preferably comprised between 30° and 60°.

2. Assembly for a front bumper (16) according to claim 1, **characterised in that** the positioning relief (46) comprises a positioning groove (48) with a depth (84), the positioning tab (38) comprising a maximum thickness (86) less than the said depth (84); preferably the positioning portion (44) comprising at least two positioning surfaces (64) cooperating with the positioning relief (46).

3. Assembly for a front bumper (16) according to claim 2, **characterised in that** the positioning relief (46) comprises a relief width (76) greater than or equal to the second width (74).

4. Assembly for front bumpers (16) according to one of claims 1 to 3, **characterised in that** the positioning tab (38) has a connecting section (70) with a first width (72), the positioning portion (44) extending from the connecting section (70) and comprises a second width (74) greater than the first width (72); preferably the positioning portion (44) comprises a disk against the positioning face (36).

5. Assembly for front bumpers (16) according to one of claims 1 to 4, **characterised in that** the air intake grille (24) comprises a vertical drawing (42) and a frame (40), the positioning lug (38) extending in the vertical drawing (42) from the frame (40); preferably the positioning lug (38) is thinner than the frame (40) and the frame (40) is below the transverse body (60).

6. Assembly for a front bumper (16) according to one of claims 1 to 5, **characterised in that** the assembly for a front bumper (16) further comprises a bumper skin item (18), the positioning tab (38) being between the bumper skin item (18) and the shock absorber (30); preferably, the positioning portion (44) comprises a bearing surface (88) against the positioning face (36); the bearing surface (88) being supporting beam.

7. Assembly for a front bumper (16) according to one of claims 1 to 6, **characterised in that** the positioning relief (46) is a first positioning relief (50) with a first main management (52), the positioning tab (38) is a first positioning tab (54), the positioning portion (44) is a first positioning portion; the air intake grille (24) comprises a second positioning tab (56) with a second positioning portion, and the positioning face (36) comprises a second positioning relief (58) interpenetrating with the second positioning portion in order to position the second positioning tab (56) by report with the transverse body (60); the second positioning relief (58) comprises a second main management (82) inclined by report with the first main management (52) by a second angle (62) comprised between 45° and 135°; preferably comprised between 80° and 100°.

8. Motor vehicle (10) comprising a front bumper assembly (16); **characterised in that** the front bumper assembly (16) is in accordance with one of claims 1 to 7; preferably, the air intake grille (24) is a lower air intake grille (26) arranged under the shock absorber (30).
